# EUROPEAN PATENT APPLICATION

(11) **EP 2 471 859 A1**
(43) Date of publication of application: **04.07.2012**
(21) Application number: 10811613.8
(22) Date of filing: 05.07.2010
(51) Int. Cl.: C08L 23/10, B32B 27/32, C08J 5/18, C08L 23/16, C08L 45/00

(54) **STRETCH WRAP FILM**

(30) Priority: 24.08.2009 JP 2009193491; 30.11.2009 JP 2009271921
(71) Applicant: Mitsubishi Plastics, Inc., Tokyo 103-0021 (JP)
(72) Inventor: KITADA, Satoshi, Nagahama-shi Shiga 526-0243 (JP); KOBAYASHI, Noriyuki, Nagahama-shi Shiga 526-0243 (JP); TANIGUCHI, Kouichirou, Nagahama-shi Shiga 526-0023 (JP)
(74) Representative: TER MEER - STEINMEISTER & PARTNER GbR
(86) International application number: PCT/JP2010/061418
(87) International publication number: WO 2011/024562

(57) **Abstract**

There is provided a novel chlorine-free stretch packaging film which has good packaging workability, packaging finish, elastic recovery, bottom sealing stability and transparency, hardly suffers from occurrence of tearing thereof and breakage when used in a low temperature condition, and is excellent in storage stability as pellets and economy. The stretch packaging film of the present invention comprises a layer X comprising a resin composition X which comprises, as main components, a propylene-ethylene random copolymer (A) which has an ethylene content of not less than 5% by mass and satisfies the condition that a single peak is observed in a crystallization curve of the component (A), and the peak temperature is not higher than 70°C (condition (1)), and a crystalline polypropylene-based resin (B) which satisfies the condition that among peaks observed in a crystallization curve of the component (B), the maximum peak temperature is higher than 70°C (condition (2)), wherein a mass ratio of the component (A) to the component (B) ((A) : (B)) is 8:2 to 2:8.

## Description

### TECHNICAL FIELD

The present invention relates to a stretch packaging film useful for food packaging, and more particularly, to a stretch packaging film containing no chlorine nor plasticizer for polyvinyl chloride.

### BACKGROUND ART

Heretofore, polyvinyl chloride-based films have been mainly used as stretch packaging films for so-called prepackaging to wrap fruits, meats or prepared food placed on lightweight trays. Such polyvinyl chloride-based films have not only properties suitable for packaging such as good packaging efficiency and neat packaging finish, but also superiority in the product quality admitted by both distributors and consumers such that they are excellent in the elastic recovery to regain an initial shape thereof even when deformed, e.g., by a finger upon wrapping, they are excellent in the bottom sealing property, and peeling of films during transportation or display scarcely takes place, and thus the commercial value of the wrapped products can be maintained.

However, in recent years, the problems such as generation of hydrogen chloride gas during incineration and elution of plasticizers contained in large amounts, have been pointed out against the polyvinyl chloride-based films. Accordingly, various studies have been made on alternate materials to be substituted for the polyvinyl chloride-based films. In particular, stretch packaging films of various structures employing polyolefin-based resins have been proposed. Among them, studies have been actively made on stretch films having a two kind/three layer structure in which surface layers formed of ethylene-vinyl acetate copolymers as the main component and an core layer formed of various polypropylene-based resins as the main components, because of good surface properties and transparency, adequate heat resistance, flexibility for design of materials, economical efficiency, etc., which are required as a stretch packaging film.

For example, in Patent Document 1, there has been proposed a stretch film for food packaging which includes at least one layer comprising a propylene-based polymer having a heat of crystallization of 10 to 60 J/g and a petroleum resin.

In addition, in Patent Document 2, there has been proposed a stretch film for food packaging which includes at least one mixed resin layer comprising the following three main components (A), (B) and (C), and has a storage elastic modulus (E') of 5.0 x 10⁸ to 5.0 x 10⁹ dyn/cm² as measured for a dynamic viscoelasticity thereof at a frequency of 10 Hz and a temperature of 20°C, and a loss tangent (tanδ) of 0.2 to 0.8:
(A) A copolymer of an aromatic vinyl compound and a conjugated diene or a hydrogenated derivative thereof;
(B) A petroleum resin, a terpene resin, a chroman-indene resin or a hydrogenated derivative thereof; and
(C) A propylene-based resin.

Also, in Patent Document 3, there has been proposed a polyolefin-based stretch packaging film which includes at least one layer comprising as a main component, a soft polypropylene-based resin which is controlled in stereo regularity and has a molecular chain in which a crystalline block portion and a non-crystalline block portion are present in a mixed state, wherein the film has a storage elastic modulus (E') of 5.0 x 10⁸ to 5.0 x 10⁹ dyn/cm² as measured for a dynamic viscoelasticity thereof at a frequency of 10 Hz and a temperature of 20°C, and a loss tangent (tanδ) of 0.2 to 0.8.

### PRIOR ARTS:

### Patent Documents

Patent Document 1: Japanese Patent No. 3296532
Patent Document 2: Japanese Patent No. 3386945
Patent Document 3: Japanese Patent Application Laid-Open (KOKAI) No. 2000-44695

### SUMMARY OF THE INVENTION

### Problems to be Solved by the Invention

As described above, although various kinds of novel polyolefin-based stretch packaging films have been proposed as chlorine-free stretch packaging films containing no chlorine nor plasticizer for polyvinyl chloride, there is still a demand for stretch packaging films which are improved in storage stability of raw material pellets (property capable of preventing occurrence of blocking of the raw material pellets during metering or transportation), properties required when used in an automatic machine, transparency of the films, low-temperature suitability such as anti-sagging property of the films when used for packaging, etc., in order to further facilitate used thereof.

Accordingly, an object of the present invention is to provide a novel chlorine-free stretch packaging film which has good packaging workability, packaging finish, elastic recovery, bottom sealing stability and transparency, hardly suffers from occurrence of tearing thereof and breakage when used in a low temperature condition, and is excellent in storage stability as pellets and economy.

### Means for Solving Problems

According to the present invention, there is provided a stretch packaging film comprising a layer X comprising a resin composition X which comprises, as main components, a propylene-ethylene random copolymer (A) which has an ethylene content of not less than 5% by mass and satisfies the following condition (1); and a crystalline polypropylene-based resin (B) which satisfies the following condition (2), wherein a mass ratio of the component (A) to the component (B) ((A):(B)) is 8:2 to 2:8:
Condition (1): that a single peak is observed in a crystallization curve of the component (A) as measured at a temperature drop rate of 10°C/min using a differential scanning calorimeter (DSC), and the peak temperature is not higher than 70°C; and
Condition (2): that among peaks observed in a crystallization curve of the component (B) as measured at a temperature drop rate of 10°C/min using a differential scanning calorimeter (DSC), the maximum peak temperature is higher than 70°C.

### EFFECT OF THE INVENTION

In accordance with the present invention, there is provided a chlorine-free stretch packaging film which is improved in storage stability of raw material pellets thereof, has good packaging workability, packaging finish, elastic recovery, bottom sealing stability and transparency, hardly suffers from occurrence of tearing thereof and breakage when used in a low temperature condition, and is excellent in economy.

### PREFERRED EMBODIMENTS FOR CARRYING OUT THE INVENTION

In the following, the stretch packaging film as an example of the preferred embodiment of the present invention (hereinafter referred to as the "present stretch film") is explained. However, it should be noted that the following embodiment is only illustrative and not intended to limit the present invention thereto.

### <Laminated layer structure>

The present stretch film is a stretch packaging film comprising a layer X comprising a resin composition X which comprises, as main components, a specific propylene-ethylene random copolymer (A) and a specific crystalline polypropylene-based resin (B).

In consequence, the present stretch film may be in the form of either a single layer film comprising the layer X solely or a multi-layer film comprising the other layer(s) in addition to the layer X. The multi-layer film may have, for example, such a structure in which a layer Y comprising an ethylene-based polymer (D) as a main component is formed on one or both surfaces of the layer X. In the above structure, the other layer may be intervened between the layer X and the layer Y, or the other surface layers may be laminated thereon.

### <Layer X>

The layer X comprises the specific propylene-ethylene random copolymer (A) and the specific crystalline polypropylene-based resin (B) as main components.

### (Propylene-ethylene random copolymer (A))

The propylene-ethylene random copolymer (A) used in the present stretch film has an ethylene content of not less than 5% by mass, and it is important for the component (A) to satisfy the condition that a single peak is observed in a crystallization curve of the component (A) as measured at a temperature drop rate of 10°C/min using a differential scanning calorimeter (DSC), and the peak temperature is not higher than 70°C (condition (1)).

The crystallization peak temperature may vary depending upon a molecular weight, an ethylene content (copolymerization ratio), a degree of random (dispersibility of the ethylene component in the copolymer), a stereo regularity or the like of the propylene-ethylene random copolymer (A) used. In the present stretch film, the crystallization peak temperature of the propylene-ethylene random copolymer (A) is preferably controlled by adjusting an ethylene content thereof. In general, there is such a tendency that the higher the ethylene content, the lower the crystallization peak temperature becomes.

When the ethylene content in the propylene-ethylene random copolymer (A) is less than 5% by mass, the resulting film tends to be deteriorated in flexibility, so that it may be considerably difficult to ensure properties thereof required as a stretch packaging film such as packaging workability, packaging finish, elastic recovery, bottom sealing property and transparency. The upper limit of the ethylene content in the propylene-ethylene random copolymer (A) is not particularly limited, and is practically not more than 30% by mass. The propylene-ethylene random copolymer (A) having an ethylene content of not more than 30% by mass can be prevented from suffering from excessive deterioration in crystallizability, so that there tends to hardly occur the problem that the raw material pellets are susceptible to blocking.
From these viewpoints, the ethylene content in the propylene-ethylene random copolymer (A) is preferably 5 to 30% by mass, more preferably 8 to 25% by mass and still more preferably 10 to 20% by mass.

The ethylene content as used herein may be determined by various known analyzing methods. For example, the ethylene content may be calculated from the measurement results of ¹³C-NMR spectrum obtained using a nuclear magnetic resonance apparatus. More specifically, the compositional ratio between propylene units and ethylene units in the copolymer may be calculated from an intensity ratio between a spectrum of a methyl carbon derived from the propylene units and a spectrum of a methyl carbon derived from the ethylene units which are obtained in the ¹³C-NMR spectrum measurements.

In addition, in the propylene-ethylene random copolymer (A), in the case where not a single peak but double peaks are observed in the crystallization temperature curve thereof as measured at a temperature drop rate of 10°C/min using a differential scanning calorimeter (DSC), it is meant that the peak of the crystallization temperature of the ethylene units and the peak of the crystallization temperature of the propylene units are separately present and observed. In such a case, even though the copolymer is a random copolymer, the ethylene units are present therein in the form of massive crystals and therefore fail to be uniformly dispersed therein, so that there tend to be caused the problems such as poor transparency of the resulting film, stickiness of the raw material pellets and occurrence of blocking during storage.

In addition, in the propylene-ethylene random copolymer (A), when the single peak temperature determined from the crystallization curve as measured at temperature drop rate of 10°C/min using a differential scanning calorimeter (DSC) is not higher than 70°C, the resulting film can maintain a good flexibility, so that properties required as a stretch packaging film such as good packaging workability, packaging finish, elastic recovery, bottom sealing stability and transparency can be ensured.
From these viewpoints, in the propylene-ethylene random copolymer (A), the single peak temperature determined from the crystallization curve thereof as measured at temperature drop rate of 10°C/min using a differential scanning calorimeter (DSC) is preferably not higher than 60°C and more preferably not higher than 50°C. The lower limit of the single peak temperature is not particularly limited, and is practically not lower than 0°C.

The propylene-ethylene random copolymer (A) preferably has a melt flow rate (as measured at 230°C under a load of 21.18 N according to JIS K 7210) of 0.5 to 25 g/10 min and more preferably 1 to 20 g/10 min.

The propylene-ethylene random copolymer (A) may comprise a comonomer other than ethylene as long as the above condition (1) can be satisfied.
As the copolymer, there may be used one compound or two or more compounds selected from 1-butene, 1-pentene, 4-methyl pentene-1, 1-hexene, 1-octene, 1-decene, 1-dodecene, 1-tetradecene, 1-hexadecene, 1-octadecene and 1-eicocene.

The above-mentioned compounds as the propylene-ethylene random copolymer (A) may be used alone or in combination of any two or more thereof.

### (Crystalline polypropylene-based resin (B))

It is important that the crystalline polypropylene-based resin (B) used in the present stretch film satisfies the condition that the maximum peak temperature among peaks observed in the crystallization curve thereof as measured at a temperature drop rate of 10°C/min using a differential scanning calorimeter (DSC) is higher than 70°C (condition (2)). Examples of the crystalline polypropylene-based resin (B) include a propylene homopolymer, and a random copolymer or a block copolymer of propylene and the "other monomer copolymerizable with propylene".
When compounding such a crystalline polypropylene-based resin (B), the resulting film can be enhanced in various packaging properties such as bottom sealing property and cutting property, and the storage stability of the raw material pellets and the strength and heat resistance of the film can also be enhanced.

Examples of the other monomer copolymerizable with propylene include a-olefins having 4 to 12 carbon atoms such as ethylene, 1-butene, 1-hexene, 4-methyl pentene-1 and 1-octene, vinyl benzene, and dienes such as 1,4-cyclohexadiene, dicyclopentadiene, cyclooctadiene and ethylidene norbornene. The two or more kinds of these monomers may be copolymerized.

From the viewpoint of imparting an adequate flexibility required as a stretch film, as the crystalline polypropylene-based resin (B), there are preferably used one component or a mixture of two or more components selected from the group consisting of a propylene-ethylene random copolymer, a propylene-ethylene-butene-1 copolymer and a reactor-type polypropylene-based elastomer.

Meanwhile, in the crystalline polypropylene-based resin (B), the "maximum peak temperature among peaks observed in the crystallization curve as measured at a temperature drop rate of 10°C/min using a differential scanning calorimeter (DSC)" means the highest peak temperature among a plurality of peak temperatures if double or more peaks are observed in the crystallization curve, and means a single peak temperature when only one peak is observed in the crystallization curve. The maximum peak temperature as used herein may vary depending upon a molecular weight, a copolymerization ratio, a degree of random (dispersibility of the other monomer component in the copolymer), a stereo regularity or the like of the crystalline polypropylene-based resin (B) used. In the present stretch film, the maximum peak temperature is preferably controlled by adjusting a copolymerization ratio thereof. In general, there is such a tendency that the lower the content of the components copolymerized, the higher the maximum peak temperature of the resulting copolymer becomes.

When the maximum crystallization peak temperature is higher than 70°C, it is possible to maintain a strength and a heat resistance of the resulting film.
The maximum crystallization peak temperature of the crystalline polypropylene-based resin (B) as measured using a differential scanning calorimeter (DSC) is more preferably not lower than 80°C and especially preferably not lower than 90°C. The upper limit of the maximum crystallization peak temperature is not particularly limited, and is practically not higher than 170°C.

When the propylene-ethylene random copolymer is used as the crystalline polypropylene-based resin (B), the ethylene content therein is preferably less than 5% by mass, more preferably not more than 4.5% by mass and still more preferably not more than 4% by mass.

The crystalline polypropylene-based resin (B) preferably has a melt flow rate (as measured at 230°C under a load of 21.18 N according to JIS K 7210) of 0.5 to 25 g/10 min and more preferably 1 to 20 g/10 min.

### (Proportions of respective components)

In the layer X, i.e., in the resin composition X, the proportion between the propylene-ethylene random copolymer (A) and the crystalline polypropylene-based resin (B) is preferably controlled such that a mass ratio of the component (A) to the component (B) ((A):(B)) is 8:2 to 2:8.
When the content of the component (A) in the layer X or resin composition X is more than the above-specified range, the resulting film tends to become excessively flexible, and therefore tends to be deteriorated in cutting property as well as exhibit a poor heat resistance. On the other hand, When the content of the component (B) in the layer X or resin composition X is excessive, the resulting film may fail to ensure properties required as a stretch packaging film such as packaging workability, packaging finish, elastic recovery, bottom sealing property and transparency.
From these viewpoints, with respect to the proportion between the components (A) and (B), the mass ratio of the component (A) to the component (B) is more preferably not less than 2:8, still more preferably not less than 3:7, and especially preferably not less than 4:6. In addition, the mass ratio of the component (A) to the component (B) is more preferably not more than 8:2, still more preferably not more than 7:3, and especially preferably not more than 6:4.

### (Resin (C))

The layer X, i.e., the resin composition X may also contain, in addition to the component (A) and the component (B), a specific resin as a component (C).

Examples of the resin (C) include one resin or two or more resins selected from the group consisting of a petroleum resin, a terpene resin, a chroman-indene resin, a rosin-based resin and a hydrogenated derivative thereof (these resins are hereinafter totally referred to as a "petroleum resin").
The use of such a resin (C) in the film is effective to further improve a packaging suitability of the film such as stiffness, cutting property and bottom sealing stability as well as transparency.

Examples of the petroleum resin include alicyclic petroleum resins obtained from cyclopentadiene or a dimer thereof, aromatic petroleum resins obtained from C9 components, and petroleum resins of a copolymer type obtained from the alicyclic and aromatic petroleum resins.
Examples of the terpene resin include terpene resins obtained from b-pinene and terpene-phenol resins.
Examples of the rosin-based resin include rosin resins such as gum rosins and wood rosins, and esterified rosin resins which are obtained by modifying rosins with glycerol, pentaerythritol, etc.

As the above petroleum resins, from the viewpoints of good color tone, thermal stability and compatibility, there are preferably used the hydrogenated derivatives.
In addition, the above petroleum resins are produced as resins having various softening temperatures mainly owing to the difference in molecular weight therebetween. The softening temperature of the petroleum resins is 100 to 150°C and preferably 110 to 140°C.
Specific examples of the petroleum resins include commercially available products such as "HI-LET" and "PETROSIN" (tradenames) produced by Mitsui Chemicals Inc., "ALCON" (tradename) produced by Arakawa Chemical Industries, Ltd., "CLEARON" (tradename) produced by Yasuhara Chemical Co., Ltd., "I-MARV" (tradename) produced by Idemitsu Petrochemical Corp., and "ESCORETTE" (tradename) produced by Eastman Chemical Co., Ltd.

The content of the resin (C) in the layer X, i.e., in the resin composition X is preferably 1 to 40% by mass. When the content of the resin (C) the layer X or resin composition X is not less than 1% by mass, the resulting film can fully exhibit properties required as a stretch film such as cutting property and bottom sealing stability. In particular, the content of the resin (C) in the layer X or resin composition X is more preferably not less than 5% by mass, and still more preferably not less than 10% by mass. On the other hand, when the content of the resin (C) in the layer X or resin composition X is not more than 40% by mass, the resulting film is free from deterioration in low-temperature suitability required as a stretch film because of increase in glass transition temperature thereof, and can also be prevented from suffering from occurrence of blocking owing to bleeding of low-molecular compounds therefrom. Therefore, from these viewpoints, the content of the resin (C) in the layer X or resin composition X is more preferably not more than 35% by mass and still more preferably not more than 30% by mass.

### (Ethylene-based polymer (D))

The layer X, i.e., the resin composition X may also contain, in addition to the component (A) and the component (B), a specific ethylene-based polymer as a component (D). Thus, by using the ethylene-based polymer (D) in combination with the component (A), it is possible to obtain the effect of improving a low-temperature suitability of the resulting film.

Examples of the ethylene-based polymer (D) include low-density polyethylene, linear low-density polyethylene, linear ultra-low-density polyethylene, medium-density polyethylene, high-density polyethylene, and copolymers comprising ethylene as a main component, for example, copolymers or multi-component copolymers of ethylene with at least one comonomer selected from the group consisting of a-olefins having 3 to 10 carbon atoms such as propylene, butene-1, pentene-1, hexene-1, 4-methyl pentene-1, heptene-1 and octene-1, vinyl esters such as vinyl acetate and vinyl propionate, unsaturated carboxylic acid esters such as methyl acrylate, ethyl acrylate, methyl methacrylate and ethyl methacrylate and ionomers thereof, and unsaturated compounds such as conjugated dienes and non-conjugated dienes, and mixed compositions thereof.
The content of ethylene units in the ethylene-based polymer is usually more than 50% by mass.

Among the above compounds as the ethylene-based polymer (D), preferred is at least one ethylene-based polymer selected from the group consisting of low-density polyethylene, linear low-density polyethylene, linear ultra-low-density polyethylene, an ethylene-vinyl acetate copolymer (EVA), an ethylene-acrylic ester copolymer, an ethylene-methacrylic ester copolymer and an ionomer resin.
Examples of the acrylic ester include methyl acrylate and ethyl acrylate.
Examples of the methacrylic ester include methyl methacrylate and ethyl methacrylate.

Among the above compounds, as the ethylene-based polymer (D), more preferred is the ethylene-vinyl acetate copolymer having a vinyl acetate unit content of 5 to 25% by mass and a melt flow rate of 0.2 to 10 g/10 min (as measured at 190°C under a load of 21.18 N according to JIS K 7210). Further, among them, still more preferred is the ethylene-vinyl acetate copolymer having a melt flow rate of 0.5 to 8 g/10 min, and especially preferred is the ethylene-vinyl acetate copolymer having a melt flow rate of 1 to 6 g/10 min.
When the vinyl acetate unit content in the ethylene-vinyl acetate copolymer as the ethylene-based polymer (D) is not less than 5% by mass, the resulting film is soft, and not only can maintain a flexibility and an elastic recovery, but also can impart a good adhesion property to a surface thereof when the layer X forms a surface layer. On the other hand, when the vinyl acetate unit content in the ethylene-vinyl acetate copolymer as the ethylene-based polymer (D) is not more than 25% by mass, for example, even though the layer X forms a surface layer, the surface of the resulting film is free from excessively high stickiness, so that the film can maintain a good winding property and a good appearance. In addition, when the melt flow rate of the ethylene-vinyl acetate copolymer as the ethylene-based polymer (D) is not less than 0.2 g/10 min, the resulting resin composition can maintain a good extrusion moldability. On the other hand, when the melt flow rate of the ethylene-vinyl acetate copolymer as the ethylene-based polymer (D) is not more than 10 g/10 min, the resulting resin composition can maintain a good film-forming stability, so that it is possible to suppress unevenness of thickness and variation of mechanical strength of the resulting film, etc.

The content of the ethylene-based polymer (D) in the layer X, i.e., in the resin composition X is preferably 1 to 40% by mass. When the content of the ethylene-based polymer (D) in the layer X or resin composition X is not less than 1% by mass, the resulting film can exhibit a sufficient low-temperature suitability required as a stretch film. In particular, the content of the ethylene-based polymer (D) in the layer X or resin composition X is more preferably not less than 5% by mass, and still more preferably not less than 10% by mass. On the other hand, when the content of the ethylene-based polymer (D) in the layer X or resin composition x is not more than 40% by mass, the resulting film can exhibit a sufficient bottom sealing property and a sufficient heat resistance. From these viewpoints, the content of the ethylene-based polymer (D) in the layer X or resin composition X is more preferably not more than 35% by mass and still more preferably not more than 30% by mass.

### (Other components)

The layer X, i.e., the resin composition X may be appropriately compounded, for example, with an anti-fogging agent, an antistatic agent and the following various additives for imparting a lubricating property, a self-tacking property, etc., to the resulting film.
Examples of the various additives include aliphatic alcohol-based fatty acid esters as a compound obtained from a fatty acid alcohol having 1 to 12 carbon atoms and preferably 1 to 6 carbon atoms and a fatty acid having 10 to 22 carbon atoms and preferably 12 to 18 carbon atoms. Specific examples of the aliphatic alcohol-based fatty acid esters include monoglycerin oleate, polyglycerin oleate, glycerin triricinolate, glycerin acetyl ricinolate, polyglycerin stearate, glycerin laurate, polyglycerin laurate, methyl acetyl ricinolate, ethyl acetyl ricinolate, butyl acetyl ricinolate, propylene glycol oleate, propylene glycol laurate, pentaerythritol oleate, polyethylene glycol oleate, polypropylene glycol oleate, sorbitan oleate, sorbitan laurate, polyethylene glycol sorbitan oleate and polyethylene glycol sorbitan laurate, as well as polyalkyl ether polyols, more specifically, such as polyethylene glycol and polypropylene glycol, and paraffin-based oils. These compounds may be used alone or in combination of any two or more thereof.
These additives may be suitably used in an amount of 0.1 to 12 parts by mass and preferably 1 to 8 parts by mass based on 100 parts by mass of the resin component constituting the layer X.

### <Layer Y>

As described previously, the layer Y comprising the ethylene-based polymer (D) as a main component may be formed, for example, on one or both surfaces of the layer X although the layer Y is not essential.
By laminating the layer Y on one or both surfaces of the layer X, the resulting film can be enhanced in a heat sealing property (bottom sealing property), in particular, under low-temperature condition, a self-tacking property and a moldability when subjected to inflation molding process.

Examples of the ethylene-based polymer (D) include low-density polyethylene, linear low-density polyethylene, linear ultra-low-density polyethylene, medium-density polyethylene, high-density polyethylene, and copolymers comprising ethylene as a main component, for example, copolymers or multi-component copolymers of ethylene with at least one comonomer selected from the group consisting of a-olefins having 3 to 10 carbon atoms such as propylene, butene-1, pentene-1, hexene-1, 4-methyl pentene-1, heptene-1 and octene-1, vinyl esters such as vinyl acetate and vinyl propionate, unsaturated carboxylic acid esters such as methyl acrylate, ethyl acrylate, methyl methacrylate and ethyl methacrylate and ionomers thereof, and unsaturated compounds such as conjugated dienes and non-conjugated dienes, and mixed compositions thereof.
The content of ethylene units in the ethylene-based polymer is usually more than 50% by mass.

Among the above compounds as the ethylene-based polymer (D), preferred is at least one ethylene-based polymer selected from the group consisting of low-density polyethylene, linear low-density polyethylene, linear ultra-low-density polyethylene, an ethylene-vinyl acetate copolymer (EVA), an ethylene-acrylic ester copolymer, and an ethylene-methacrylic ester copolymer.
Examples of the acrylic ester include methyl acrylate and ethyl acrylate.
Examples of the methacrylic ester include methyl methacrylate and ethyl methacrylate.

Among the above compounds, as the ethylene-based polymer (D), more preferred is the ethylene-vinyl acetate copolymer having a vinyl acetate unit content of 5 to 25% by mass and a melt flow rate of 0.2 to 10 g/10 min (as measured at 190°C under a load of 21.18 N according to JIS K 7210). Further, among them, still more preferred is the ethylene-vinyl acetate copolymer having a melt flow rate of 0.5 to 8 g/10 min, and especially preferred is the ethylene-vinyl acetate copolymer having a melt flow rate of 1 to 6 g/10 min.
When the vinyl acetate unit content in the ethylene-vinyl acetate copolymer as the ethylene-based polymer (D) is not less than 5% by mass, the resulting film is soft, and not only can maintain a flexibility and an elastic recovery, but also can impart a good adhesion property to a surface thereof when the layer Y forms a surface layer. On the other hand, when the vinyl acetate unit content in the ethylene-vinyl acetate copolymer as the ethylene-based polymer (D) is not more than 25% by mass, for example, even though the layer Y forms a surface layer, the surface of the resulting film is free from excessively high stickiness, so that the film can maintain a good winding property and a good appearance. In addition, when the melt flow rate of the ethylene-vinyl acetate copolymer as the ethylene-based polymer (D) is not less than 0.2 g/10 min, the resulting resin composition can maintain a good extrusion moldability. On the other hand, when the melt flow rate of the ethylene-vinyl acetate copolymer as the ethylene-based polymer (D) is not more than 10 g/10 min, the resulting resin composition can maintain a good film-forming stability, so that it is possible to suppress unevenness of thickness and variation of mechanical strength, etc.

Meanwhile, thus, when laminating the layer Y comprising the ethylene-based polymer (D) as a main component on one or both surfaces of the layer X, the ethylene-based polymer (D) contained in the layer X may be the same as or different from that contained in the layer Y.
For example, trimming loss generated upon cutting and trimming both edges of a film produced in the process for production of the present stretch film may be used by compounding it with the resin composition X, so that it is possible to eliminate waste of materials and reduce costs of the materials. In this case, the ethylene-based polymer (D) contained in the layer X is the same as that contained in the layer Y.

### (Other components)

The layer Y may be appropriately compounded, for example, with an anti-fogging agent, an antistatic agent and the following various additives for imparting a lubricating property, a self-tacking property, etc., to the resulting film.
Examples of the various additives include aliphatic alcohol-based fatty acid esters as a compound obtained from a fatty acid alcohol having 1 to 12 carbon atoms and preferably 1 to 6 carbon atoms and a fatty acid having 10 to 22 carbon atoms and preferably 12 to 18 carbon atoms. Specific examples of the aliphatic alcohol-based fatty acid esters include monoglycerin oleate, polyglycerin oleate, glycerin triricinolate, glycerin acetyl ricinolate, polyglycerin stearate, glycerin laurate, polyglycerin laurate, methyl acetyl ricinolate, ethyl acetyl ricinolate, butyl acetyl ricinolate, propylene glycol oleate, propylene glycol laurate, pentaerythritol oleate, polyethylene glycol oleate, polypropylene glycol oleate, sorbitan oleate, sorbitan laurate, polyethylene glycol sorbitan oleate and polyethylene glycol sorbitan laurate, as well as polyalkyl ether polyols, more specifically, such as polyethylene glycol and polypropylene glycol, and paraffin-based oils. These compounds may be used alone or in combination of any two or more thereof.
These additives may be suitably used in an amount of 0.1 to 12 parts by mass and preferably 1 to 8 parts by mass based on 100 parts by mass of the resin component constituting the layer Y.

### <Film thickness>

The thickness of the present stretch film may be in such a range as ordinarily used for stretch packaging films, specifically, may be in the range of about 8 to about 30 µm, typically about 9 to 20 µm.
In the film having a laminated structure, the proportions of surface layers and core layer(s) are preferably controlled such that the proportion of the surface layers is 20 to 60% whereas the proportion of the core layer(s) is 80 to 40%, from the viewpoints of various properties of the resulting stretch packaging film and a good economy.

### <Production process>

The present stretch film may be produced by melting and extruding a raw material, for example, from an extruder, and subjecting the thus extruded material to inflation molding or T-die molding to form the material into a film shape.
When it is intended to produce the film having a laminated structure, there is preferably used a co-extrusion method in which the raw material is extruded through a multi-layer die using a plurality of extruders. In practice, a resin material is preferably melted and extruded from a ring die and then subjected to inflation molding. In this case, the blow-up ratio (i.e., a ratio of a diameter of a tube to a pore diameter of a die) is preferably not less than 3 and especially preferably in the range of 4 to 7. In this case, as a cooling method, there may by used the method of cooling the extruded film either from an outside of the tube, or both inside and outside of the tube.
Further, the resulting film may be heated to a temperature not higher than a crystallization temperature of the resin used therein and then may be stretched in a longitudinal direction thereof at a stretch ratio of about 1.5 to about 5 times or in a biaxial direction of the film, i.e., both longitudinal and lateral directions thereof at a stretch ratio of about 1.2 to about 5 times by utilizing a difference in rotating speed between nip rolls. The above procedures can improve a cutting property of the film and can impart a heat contraction property thereto.

### <Properties of the present stretch film>

The flexibility of the present stretch film may be controlled such that the tensile stress at 100% elongation in a width direction of the film is preferably in the range of 40 to 140 kgf/cm² and more preferably 50 to 130 kgf/cm² as measured by subjecting the film to a tensile test at a temperature of 20°C and a pulling speed of 200 mm/min according to JIS Z 1702.

### <Explanation of technical terms>

The "stretch packaging film" as used in the present invention is intended to mean a wide range of packaging films having an elongation and a self-tacking property. Typical examples of the stretch packaging film include packaging films for prepackaging to wrap fruits, meats or prepared food placed on lightweight trays, or packaging films for wrapping to fix luggage upon transportation thereof.

The "main component" as used in the present invention is intended to mean that the other components may be contained unless the effects of the main component are adversely influenced by addition thereof, unless otherwise specified. In this case, although the proportion of the main component is not particularly limited, the content of the main component (a total content of components when two or more components are included in the main component) is preferably not less than 50% by mass, more preferably not less than 70% by mass, and still more preferably not less than 90% by mass (inclusive of 100%) based on the composition.

In addition, according to the definitions of JIS, the "sheet" as used herein generally means a flat product a thickness of which is comparatively small relative to a length and a width of the product, whereas the "film" as used herein means a thin flat product a thickness of which is extremely small relative to a length and a width of the product and a maximum thickness of which is limited to an optional value, and further which is usually supplied in the form of a roll (refer to JIS K 6900). For example, with respect to the thickness, in a narrow sense, the sheet is a product having a thickness of not less than 100 µm, whereas the film is a product having a thickness of less than 100 µm. However, there is no clear boundary between the sheet and film. In the present invention, it is not necessary that the sheet and film are literally distinguished from each other. Therefore, in the present invention, it should be understood that even through the product is referred to as the "film", the product also comprises the "sheet", on the contrary, even through the product is referred to as the "sheet", the product also comprises the "film".

The expression "X to Y" (X and Y are optional numerals) described in the present invention is intended to mean "not less than X and not more than Y" inclusive of "preferably more than X" and "preferably less than Y" unless otherwise specified.
In addition, the expression "not less than X" (X is an optional numeral) described in the present invention is intended to mean to include "preferably more than X" unless otherwise specified. Whereas, the expression "not more than Y" (Y is an optional numeral) described in the present invention is intended to mean to include "preferably less than Y" unless otherwise specified.

### EXAMPLES

The present invention is described in more detail by Examples below. However, the following Examples are only illustrative and not intended to limit the present invention thereto. Meanwhile, in the present specification, various measurements and evaluations as to films and materials thereof were conducted as follows. In the following descriptions, the flow direction of a film from an extruder is referred to as a "machine direction", whereas the direction perpendicular to the flow direction is referred to as a "transverse direction".

### (1) Crystallization curve and crystallization peak temperature (Tc):

Using "DSC-7" manufactured by Perkin-Elmer Corp., a sample to be measured was heated to 200°C at a temperature rise rate of 10°C/min, held at 200°C for 1 min, and then cooled at a temperature drop rate of 10°C/min according to JIS K 7121 to prepare a crystallization curve thereof. From the thus prepared crystallization curve, it was determined whether or not a peak of the crystallization temperature is single, and the crystallization peak temperature (°C) was determined.

### (2) Tensile stress at 100% elongation in a transverse direction of film:

A tensile test was carried out at 20°C at a pulling speed of 200 mm/min according to JIS Z 1702 to measure a tensile stress (kgf/cm²) at 100% elongation in a transverse direction of the film.

### (3) Storage property of raw material pellets:

The raw material stored in a stock tank was sucked by a blower through a hose (inner diameter: 50 mm) equipped with a metal nozzle and delivered to a metering device to determine whether or not any failure occurred and to thereby evaluate the storage property according to the following ratings.
⊚: No failure occurred;
○: Slightly unstable air delivery occurred;
△: Failure of delivery or metering occurred owing to blocking; and
×: Complete solidification occurred with time.

### (4) Adaptability to packaging machines:

Using an automatic packaging machine "ISHIDA W-mini ZERO 1" manufactured by Ishida Co., Ltd., a foamed polystyrene tray (length: 200 mm; width: 150 mm; height: 30 mm) was wrapped with the film (width: 350 mm) obtained in respective Examples and Comparative Examples to evaluate a cutting property, occurrence of wrinkle upon packaging, a bottom sealing stability and a tearing property according to the ratings shown in Table 2 to thereby determine an adaptability to packaging machines of the film. The results are shown in Table 1.

### (5) Low-temperature suitability:

A wet towel having a weight of 400 g as a dummy food was placed in a foamed polystyrene tray (length: 250 mm; width: 180 mm; height: 25 mm), and hand-wrapped with the film obtained in respective Examples and Comparative Examples using a hand wrapper to prepare 10 packages. The thus prepared 10 packages as samples were packed in a corrugated board casing (length: 380 mm; width: 315 mm; height: 165 mm) such that the five packages were stacked on one another and the 10 packages were therefore arranged in two rows as a whole. The thus packed corrugated board casing was stored at -25°C for 24 hr to freeze the packages. After completion of the freezing, the corrugated board casing with the packages was dropped from a height of 1 m to a ground, and then unpacked to examine the condition of the respective packages (including looseness of top surface, tearing (cracking) of film, etc.).
⊚: No defects occurred;
○: Slight looseness of the top surface occurred, but no tearing of the film occurred;
△: Lowermost one of the stacked packages suffered from tearing of the film; and
×: Any of the stacked packages suffered from tearing of the film.

### (6) Transparency (Haze):

According to ASTM D1003, the haze values of the obtained films were measured using a haze meter and evaluated according to the following ratings.
⊚: Less than 1.5%;
○: Not less than 1.5% and less than 2.0%;
△: Not less than 2.0% and less than 2.5%; and
×: Not less than 2.5%.

### (Example 1)

A propylene-ethylene random copolymer as a component (A-1) (ethylene content: 9% by mass; crystallization peak: single; crystallization peak temperature: 66.3°C; melt flow rate (as measured at 230°C under a load of 21.18 N according to JIS K 7210) of 2 g/10 min) and a crystalline polypropylene-based resin as a component (B-1) (propylene-ethylene random copolymer; ethylene content: 3.2% by mass; crystallization peak: single; crystallization peak temperature: 115.9°C; melt flow rate (as measured at 230°C under a load of 21.18 N according to JIS K 7210) of 3 g/10 min) were melted and kneaded at a mixing ratio of 50 parts by mass: 50 parts by mass to obtain a resin composition X. The thus obtained resin composition X was subjected to extrusion inflation molding at a ring die temperature of 190°C and a blow-up ratio of 5.0 to thereby obtain a single-layer film (sample) comprising a layer X having a thickness of 12 µm.

### (Example 2)

The same procedure as defined in Example 1 was conducted except that a propylene-ethylene random copolymer as a component (A-2) (ethylene content: 15% by mass; crystallization peak: single; crystallization peak temperature: 33.6°C; melt flow rate (as measured at 230°C under a load of 21.18 N according to JIS K 7210) of 2 g/10 min) was used instead of the component (A-1), thereby obtaining a single-layer film (sample) having a thickness of 12 µm.
Meanwhile, the resulting film had a tensile stress at 100% elongation of 86.5 kgf/cm² as measured in transverse direction thereof.

### (Example 3)

The same procedure as defined in Example 1 was conducted except that in addition to the components (A-2) and (B-1) used in Example 2, a hydrogenated petroleum resin "ALCON P125" produced by Arakawa Chemical Industries, Ltd., (softening temperature: 125°C) as a component (C) was further mixed therein at a mixing ratio of (A-2):(B-1):(C) of 40 parts by mass: 40 parts by mass: 20 parts by mass, thereby obtaining a single-layer film (sample) having a thickness of 12 µm.

### (Example 4)

The same procedure as defined in Example 1 was conducted except that in addition to the components (A-2), (B-1) and (C) used in Example 3, EVA as a component (D) (vinyl acetate content: 15% by mass; melt flow rate (as measured at 190°C under a load of 21.18 N according to JIS K 7210) of 2 g/10 min) was further mixed therein at a mixing ratio of (A-2):(B-1):(C):(D) of 32 parts by mass: 32 parts by mass: 16 parts by mass: 20 parts by mass, thereby obtaining a single-layer film (sample) having a thickness of 12 µm.

### (Example 5)

A surface layer was laminated on opposite surfaces of the single-layer film obtained in Example 3 to produce a three-layer film.
More specifically, in the same manner as defined in Example 3, the components (A-2), (B-1) and (C) were melted and kneaded at a mixing ratio of (A-2):(B-I):(C) of 40 parts by mass: 40 parts by mass: 20 parts by mass. Separately, EVA (vinyl acetate content: 15% by mass; melt flow rate (as measured at 190°C under a load of 21.18 N according to JIS K 7210) of 2 g/10 min) and diglycerin oleate as an anti-fogging agent were melted and kneaded at a mixing ratio of 97 parts by mass: 3 parts by mass. These melted and kneaded resins were subjected to co-extrusion inflation molding at a blow-up ratio of 5.0 using a ring three-layer die held at a temperature of 190°C to thereby obtain a three-layer film (sample) having a total thickness of 12 µm (2 µm/8 µm/2 µm).

### (Example 6)

A surface layer was laminated on opposite surfaces of the single-layer film obtained in Example 4 to produce a three-layer film.
More specifically, in the same manner as defined in Example 4, the components (A-2), (B-1), (C) and (D) were melted and kneaded at a mixing ratio of (A-2) : (B-1) : (C) : (D) of 32 parts by mass: 32 parts by mass: 16 parts by mass: 20 parts by mass. Separately, EVA (vinyl acetate content: 15% by mass; melt flow rate (as measured at 190°C under a load of 21.18 N according to JIS K 7210) of 2 g/10 min) and diglycerin oleate as an anti-fogging agent were melted and kneaded at a mixing ratio of 97 parts by mass: 3 parts by mass. These melted and kneaded resins were subjected to co-extrusion inflation molding at a blow-up ratio of 5.0 using a ring three-layer die held at a temperature of 190°C to thereby obtain a three-layer film (sample) having a total thickness of 12 µm (2 µm/8 µm/2 µm) .

### (Comparative Example 1 )

The same procedure as defined in Example 1 was conducted except that the resin composition X was replaced with 100% by mass of the component (A-2) used in Example 2, thereby obtaining a single-layer film (sample) having a thickness of 12 µm.
However, it was confirmed that the above raw material of Comparative Example 1 was unstable in film-forming property when formed into a film shape using an inflation film-forming apparatus.
Meanwhile, it was also confirmed that the material of Comparative Example 1 exhibited a tensile stress value at 100% elongation of 18.5 kgf/cm² as measured in a width direction thereof.

### (Comparative Example 2)

A crystalline polypropylene-based resin as a component (B-1) (ethylene content: 3.2% by mass; crystallization peak: single; crystallization peak temperature: 115.9°C; melt flow rate (as measured at 230°C under a load of 21.18 N according to JIS K 7210) of 3 g/10 min) and a crystalline polypropylene-based resin as a component (B-2) (ethylene content: 22.6% by mass; crystallization peak: double; crystallization peak temperature: 77.2°C and 104.9°C; melt flow rate (as measured at 230°C under a load of 21.18 N according to JIS K 7210) of 1.5 g/10 min) were melted and kneaded at a mixing ratio of 50 parts by mass: 50 parts by mass to thereby obtain a resin composition. The thus obtained resin composition was subjected to extrusion inflation molding at a ring die temperature of 190°C and a blow-up ratio of 5.0 to thereby obtain a single-layer film (sample) having a thickness of 12 µm.

### (Comparative Example 3)

The same procedure as defined in Example 2 was conducted except that the mixing ratio between the component (A-2) and the component (B-1) was changed to (A-2) : (B-1) = 10 parts by mass: 90 parts by mass, thereby obtaining a single-layer film (sample) having a thickness of 12 µm.

### (Comparative Example 4)

The same procedure as defined in Example 4 was conducted except that the mixing ratio between the component (A-2), the component (B-1), the component (C) and the component (D) was changed to (A-2) : (B-1) : (C) : (D) = 15 parts by mass: 15 parts by mass: 20 parts by mass: 50 parts by mass, thereby obtaining a single-layer film (sample) having a thickness of 12 µm.

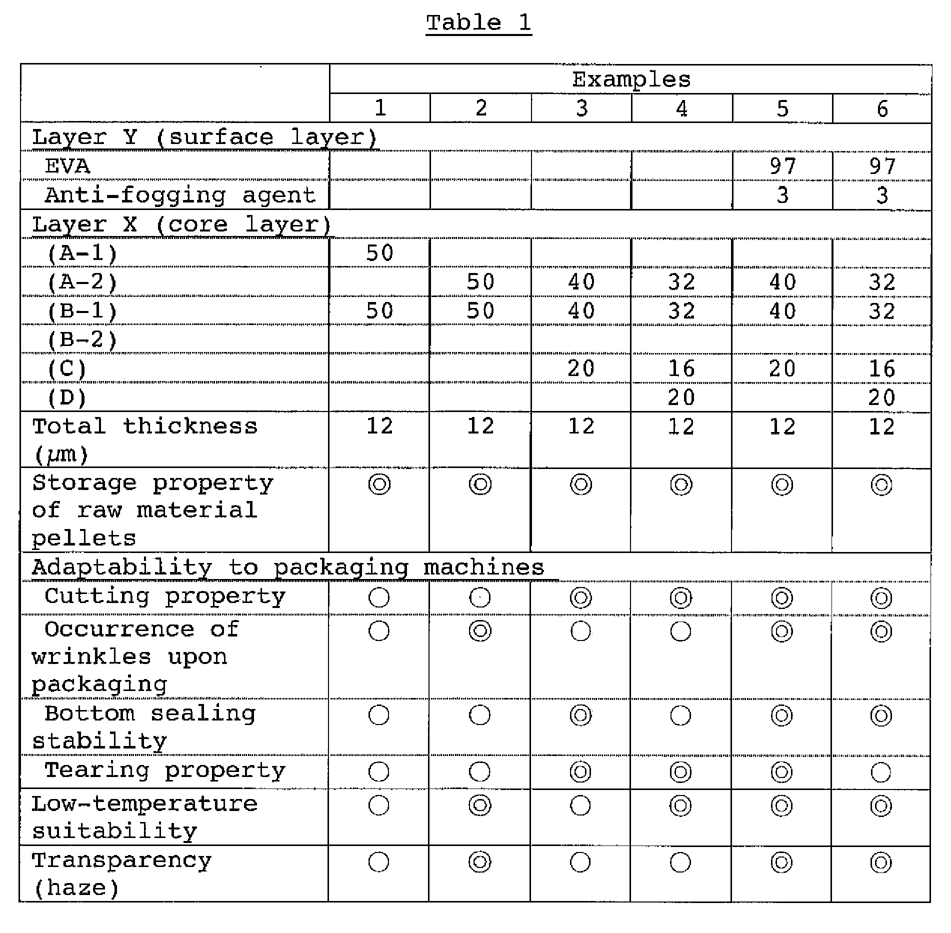

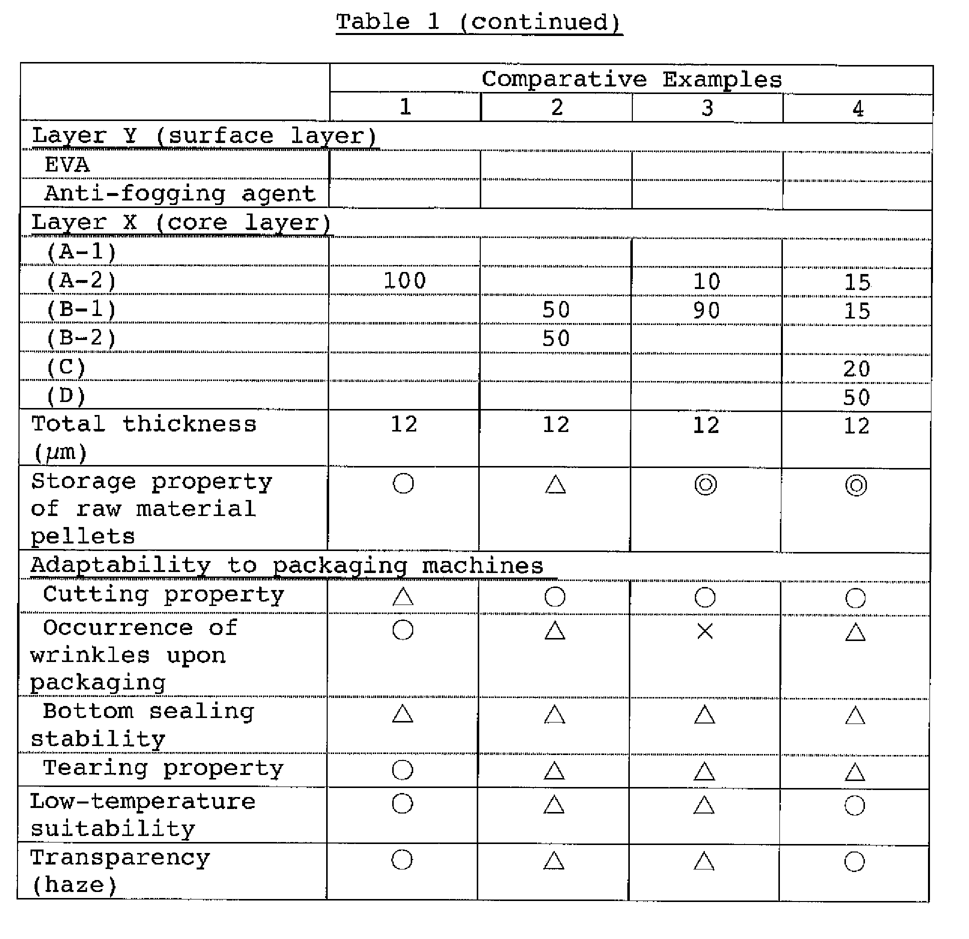

**Table 2**

| **[Evaluation items]** |
|---|
| **Cutting property:** |
| ⊚: Cuttable without any problems; |
| ○: Slightly poor cut surface, but still free of problems; |
| △: Hardly cuttable with problems upon transportation; and |
| ×: Not cut at all. |
| **Occurrence of wrinkles upon packaging;** |
| ⊚: No wrinkles occurred under normal conditions; |
| ○: Few wrinkles occurred, but still free of problems; |
| △: Wrinkles occurred over not less than 30% of an area of the film, and were not removable by any effort; and |
| ×: Wrinkles occurred over an almost entire area of the film. |
| **Bottom sealing stability:** |
| ⊚: Neatly sealed without any stiffness and peel; |
| ○: Almost properly sealed; |
| △: Crumpled film with slight peel; and |
| X: Bottom sealing portion of the film was hardly overlapped and was formed into a dumpling, resulting in failure to seal the bottom. |
| Tearing property: |
| ⊚: No torn film pieces were generated even after continuously producing 500 packs with the film; |
| ○: Less than 5 torn film pieces occurred after continuously producing 500 packs with the film; |
| Δ: Not less than 5 torn film pieces occurred after continuously producing 500 packs with the film; and |
| ×: Not less than 30 torn film pieces occurred after continuously producing 500 packs with the film. |

From the results shown in Table 1, it was recognized that the films obtained in Examples 1 to 6 in which the propylene-ethylene random copolymer (component (A)) having an ethylene content of not less than 5 % by mass and a single peak crystallization temperature as measured a differential scanning calorimeter (DSC) and the crystalline polypropylene-based resin (component (B)) were used, were excellent in any of adaptability to packaging machines, low-temperature suitability and transparency as well as storage stability of pellets. On the other hand, it was recognized that the films obtained in Comparative Examples which were produced under the conditions out of the ranges defined by the present invention were deteriorated in all of adaptability to packaging machines, low-temperature suitability and transparency.

In the total consideration of the test results previously made by the present inventors, etc., along with the above fact that the propylene-ethylene random copolymer (A) used in Examples 1 to 6 had an ethylene content of 9% (component (A-1) or 15% (component (A-2)), it is considered that the propylene-ethylene random copolymer (A) is required to have an ethylene content of not less than 5% by mass, and the ethylene content is preferably not less than 8% by mass, more preferably not less than 9% by mass and especially preferably not less than 10% by mass.
On the other hand, when using the propylene-ethylene random copolymer as the crystalline polypropylene-based resin (component (B)), in the total consideration of the test results previously made by the present inventors, etc., along with the results of the above Examples described in the present specification, it is considered that the propylene-ethylene random copolymer as the component (B) is required to have an ethylene content of less than 5% by mass, and the ethylene content is preferably less than 4.5% by mass and especially preferably less than 4% by mass.

In addition, in comparison between the results of Examples 1 to 6 and those of Comparative Examples 1 to 4, it was confirmed that the mass ratio between the components (A) and (B) ((A) : (B)) was required to lie within the range of 8:2 to 2:8, and the mass ratio (A):(B) was preferably 7:3 to 3 to 7 and more preferably 6:4 to 4:6.

In the total consideration of the test results previously made by the present inventors, etc., along with the above fact that the propylene-ethylene random copolymer (A) used in Examples 1 to 6 had a single peak temperature of 66.3°C (component (A-1)) or 33.6°C (component (A-2)), it is considered that the single peak temperature of the propylene-ethylene random copolymer (A) is preferably not higher than 70°C, more preferably not higher than 60°C and especially preferably not higher than 50°C.
On the other hand, in the total consideration of the test results previously made by the present inventors, etc., along with the above fact that the crystalline polypropylene-based resin (B) used in Examples 1 to 6 had a single peak temperature of 115.9°C (component (B-1)), it is considered that the maximum peak temperature of the crystalline polypropylene-based resin (B) is preferably higher than 70°C, more preferably not lower than 80°C and especially preferably not lower than 90°C.

Also, from the results of Comparative Example 4, it was confirmed that owing to such a condition that the content of the component (D) was 50% by mass and none of the propylene-ethylene random copolymer (A) and the crystalline polypropylene-based resin (B) were used as a main component of the layer X, there was a tendency that the resulting film suffered from deterioration in adaptability to packaging machines such as occurrence of wrinkles upon packaging, poor bottom sealing stability and poor tearing property. Therefore, it is important that the layer X comprises the propylene-ethylene random copolymer (A) and the crystalline polypropylene-based resin (B) as main components, and further it is considered that the content of the ethylene-based polymer (D) in the layer X is preferably 1 to 40% by mass.

Among the single-layer films obtained in Examples 1 to 4, the film obtained in Example 4 was preferred because it was more excellent in cutting property, tearing property and low-temperature suitability. In addition, among the films obtained in Examples 1 to 6, the laminated films obtained in Examples 5 and 6 were preferred because they were more excellent in adaptability to packaging machines, transparency and low-temperature suitability.

## Claims

1. A stretch packaging film comprising a layer X comprising a resin composition X which comprises, as main components, a propylene-ethylene random copolymer (A) which has an ethylene content of not less than 5% by mass and satisfies the following condition (1); and a crystalline polypropylene-based resin (B) which satisfies the following condition (2), wherein a mass ratio of the component (A) to the component (B) ((A) : (B)) is 8:2 to 2:8:
Condition (1) : that a single peak is observed in a crystallization curve of the component (A) as measured at a temperature drop rate of 10°C/min using a differential scanning calorimeter (DSC), and the peak temperature is not higher than 70°C; and
Condition (2): that among peaks observed in a crystal melting curve of the component (B) as measured at a temperature drop rate of 10°C/min using a differential scanning calorimeter (DSC), the maximum peak temperature is higher than 70°C.

2. A stretch packaging film according to claim 1, wherein the crystalline polypropylene-based resin (B) is one component or a mixture of two or more components selected from the group consisting of a propylene-ethylene random copolymer, a propylene-ethylene-butene-1 copolymer and a reactor-type polypropylene-based elastomer.

3. A stretch packaging film according to claim 1 or 2, wherein the resin composition X further comprises the following resin (C), and a content of the component (C) in the resin composition X is 1 to 40% by mass:
Component (C): At least one resin selected from the group consisting of a petroleum resin, a terpene resin, a chroman-indene resin, a rosin-based resin and a hydrogenated derivative thereof.

4. A stretch packaging film according to claim 3, wherein the resin (C) is a petroleum resin having a softening point of 100 to 150°C and/or a hydrogenated derivative thereof.

5. A stretch packaging film according to any one of claims 1 to 4, further comprising a layer Y which is laminated on one or both side surfaces of the layer X, and comprises an ethylene-based polymer (D) as a main component.

6. A stretch packaging film according to any one of claims 1 to 5, wherein the resin composition X further comprises the ethylene-based polymer (D), and a content of the ethylene-based polymer (D) in the resin composition X is 1 to 40% by mass.

7. A stretch packaging film according to claim 5 or 6, wherein the ethylene-based polymer (D) is one component or a mixture of two or more components selected from the group consisting of a low-density polyethylene, a linear low-density polyethylene, a linear ultra-low-density polyethylene, an ethylene-vinyl acetate copolymer, an ethylene-acrylic ester copolymer, an ethylene-methacrylic ester copolymer and an ionomer resin.

8. A stretch packaging film according to claim 5 or 6, wherein the ethylene-based polymer (D) is an ethylene-vinyl acetate copolymer having a content of a vinyl acetate unit of 5 to 25% by mass and a melt flow rate of 0.2 to 10 g/10 min (as measured at 190°C under a load of 21.18 N according to JIS K 7210).
